# EUROPÄISCHE PATENTSCHRIFT

(11) **EP 2 876 361 B1**
(45) Veröffentlichungstag und Bekanntmachung des Hinweises auf die Patenterteilung: **01.02.2017**
(21) Anmeldenummer: 14188980.8
(22) Anmeldetag: 15.10.2014
(51) Int. Cl.: F21S 8/10, F21V 8/00, F21Y 115/10, F21W 101/14

(54) **KRAFTFAHRZEUGBELEUCHTUNGSEINRICHTUNG**
MOTOR VEHICLE LIGHTING DEVICE
INSTALLATION D'ÉCLAIRAGE D'UN VÉHICULE AUTOMOBILE

(30) Priorität: 04.11.2013 DE 102013222360
(43) Veröffentlichungstag der Anmeldung: 27.05.2015
(73) Patentinhaber: Automotive Lighting Reutlingen GmbH, 72762 Reutlingen (DE)
(72) Erfinder: Zwick, Hubert, 70173 Stuttgart (DE); Kellermann, Hermann, 72762 Reutlingen (DE)
(74) Vertreter: DREISS Patentanwälte PartG mbB

(56) Entgegenhaltungen:
- CN-A- 101 625 097
- DE-A1-102010 018 119
- DE-A1-102011 051 045
- FR-A1- 2 966 224
- US-A- 5 709 453
- US-A1- 2012 075 849

## Beschreibung

Die vorliegende Erfindung betrifft eine Kraftfahrzeugbeleuchtungseinrichtung mit einer Lichtquelle und einem Lichtleiter, der einen Einkoppelbereich, eine Lichtaustrittsfläche und Umlenkflächen aufweist, wobei die Lichtquelle relativ zum Lichtleiter so angeordnet ist, dass von ihr ausgehendes Licht über den Einkoppelbereich in den Lichtleiter eintritt.

Eine solche Kraftfahrzeugbeleuchtungseinrichtung ist aus der EP 780 265 B1 bekannt.

Der Lichtleiter der bekannten Beleuchtungseinrichtung hat die Form einer kreisförmigen Platte. Im Zentrum einer ersten Plattenfläche der kreisförmigen Platte ragt ein kreisförmiger Ansatz aus der Platte heraus. An einem distalen Ende besitzt der kreisförmige Ansatz eine ebene Unterseite, an der eine LED anliegt. Aufgrund dieser Anordnung wird von der LED ausgehendes Licht in den Ansatz eingekoppelt. Im Zentrum einer zweiten Plattenfläche, die parallel zur ersten Plattenfläche liegt, weist der Lichtleiter eine kegelförmige Vertiefung auf, die mittig zu dem Ansatz liegt und die sich bis nahe an den Ansatz in die Tiefe des Lichtleiters hinein erstreckt. Die Grenzfläche der kegelförmigen Vertiefung zur umgebenden Luft bildet eine kegelförmige Reflexionsfläche.

An dieser kegelförmigen Reflexionsfläche wird das in den Ansatz eingekoppelte Licht der LED radial umgelenkt, wobei die Winkelverteilung des Lichtes bei der Reflexion an der kegelförmigen Reflexionsfläche erhalten bleibt. Zwischen dem Umfang der kreisförmigen Platte des Lichtleiters und dem Ansatz weist die erste Plattenfläche kreisförmige Vertiefungen auf, die als Reflexionsprismen wirken. Das auf sie einfallende Licht wird dort so steil in Richtung zur zweiten Plattenfläche umgelenkt, dass es über die zweite Plattenfläche aus dem Lichtleiter austritt.

Aus der Geometrie der Anordnung ergibt sich, dass weiter außen liegende Reflexionsprismen von der LED weniger stark beleuchtet werden als weiter innen liegende Reflexionsprismen. Für einen Betrachter, der sich in der Lichtverteilung der Beleuchtungseinrichtung befindet und der die leuchtende Fläche betrachtet, wird sich daher ein inhomogenes Erscheinungsbild mit von innen nach außen abnehmender Helligkeit ergeben. Dies gilt jedenfalls für eine äquidistante Anordnung der konzentrischen Auskoppelprismen, wie sie in den Figuren der EP 780 265 B1 gezeigt wird.

Der Gesetzgeber fordert, dass die Lichtverteilung einer Fahrzeugleuchte eine Breite von etwa 2 x 20°, nämlich jeweils 10° nach rechts und nach links, und eine Höhe von 2 x 10°, nämlich jeweils 10° nach oben und nach unten aufweist. Dabei beziehen sich diese Angaben auf ein Koordinatensystem, dessen Ursprung bei einer bestimmungsgemäßen Verwendung der Leuchte in einem Kraftfahrzeug auf der Höhe des Horizonts vor (oder hinter) dem Fahrzeug und in einer Verlängerung der parallel oder antiparallel zur Fahrtrichtung weisenden Hauptabstrahlrichtung der Leuchte oder in einer Verlängerung der Fahrzeuglängsachse liegt.

Aus gestalterischen Gründen wird zusätzlich gefordert, dass die Lichtaustrittsfläche der Leuchte dem Betrachter dabei ein möglichst homogen hell leuchtendes Erscheinungsbild bietet.

Vor diesem Hintergrund besteht die Aufgabe der Erfindung in der Angabe einer Kraftfahrzeugleuchte der eingangs genannten Art, mit der diese Forderungen des Gesetzgebers und des Gestalters erfüllt werden. Mit anderen Worten: Die Aufgabe der Erfindung besteht in der Angabe einer Kraftfahrzeugleuchte der eingangs genannten Art, die eine regelkonforme Signallichtverteilung erzeugt und dabei ein homogen helles Erscheinungsbild der Lichtaustrittsfläche ihres Lichtleiters besitzt. Dabei wird als zusätzliche Bedingung vorausgesetzt, dass die Lichtaustrittsfläche der Lichtquelle, aus deren Licht die Lichtverteilung generiert wird, viel kleiner als die Lichtaustrittsfläche des Lichtleiters ist.

Diese Aufgabe wird mit den Merkmalen des Anspruchs 1 gelöst. Von dem eingangs genannten Stand der Technik unterscheidet sich die Erfindung dadurch, dass der Lichtleiter ein Segment einer becherförmigen Grundform aufweist, welche Grundform einen Becherboden mit einem Außenrand und eine Becherwand aufweist, wobei der Lichtleiter ein Segment des Becherbodens und ein Segment der Becherwand aufweist, der Einkoppelbereich im Segment des Becherbodens angeordnet ist und eine erste Umlenkfläche aufweist, die auf sie einfallendes Licht der Lichtquelle radial zum Segment der Becherwand hin umlenkt, wobei zwischen dem Segment des Becherbodens und dem Segment der Becherwand eine zweite Umlenkfläche angeordnet ist, die auf sie einfallendes Licht in das Segment der Becherwand richtet, das Segment der Becherwand eine helixförmig angeordnete dritte Umlenkfläche aufweist, die einfallendes Licht in eine Umfangsrichtung des Segments der Becherwand umlenkt, und wobei die Lichtaustrittsfläche so angeordnet ist, dass in die Umfangsrichtung umgelenktes Licht über die Lichtaustrittsfläche aus dem Lichtleiter austritt.

Durch diese Merkmale wird das von der Lichtquelle zunächst in einem breit geöffneten Lichtbündel ausgehende Licht auf seinem durch den Lichtleiter hindurch zur Lichtaustrittsfläche des Lichtleiters führenden Lichtweg wiederholt umgeformt. Am Ende wird die Lichtaustrittsfläche vom Inneren des Lichtleiters her homogen und damit mit gleichmäßiger Helligkeit beleuchtet. Dadurch, dass der Lichtleiter ein Segment einer becherförmigen Grundform aufweist, welche Grundform einen Becherboden mit einem Außenrand und eine Becherwand aufweist, ergibt sich die Möglichkeit, im Becherboden radial propagierendes Licht als paralleles Licht in die Becherwand einzuspeisen. Dadurch, dass der Einkoppelbereich im Segment des Becherbodens angeordnet ist und eine erste Umlenkfläche aufweist, die auf sie einfallendes Licht der Lichtquelle radial zum Segment der Becherwand hin umlenkt, wird das von der Lichtquelle zunächst in einen Halbraum ausgehende Lichtbündel in den plattenförmigen Becherboden eingespeist. Die Form der ersten Umlenkfläche und der Lichteintrittsfläche sowie die Anordnung der Lichtquelle vor der Lichteintrittsfläche ist bevorzugt so gewählt, dass das die Lichtstrahlen jeweils einer Radialrichtung parallel zueinander ausgerichtet sind.

Dadurch, dass zwischen dem Segment des Becherbodens und dem Segment der Becherwand eine zweite Umlenkfläche angeordnet ist, wird das sich zunächst radial ausbreitende Licht in die Becherwand hinein umgelenkt. Die Umlenkung erfolgt bevorzugt so, dass es dort senkrecht zum Kreisumfang der Becherwand propagiert. Dadurch, dass das Segment der Becherwand eine helixförmig angeordnete dritte Umlenkfläche aufweist, die einfallendes Licht in eine Umfangsrichtung des Segments der Becherwand umlenkt, wird ein mit einem gewissen Öffnungswinkel in Umfangsrichtung propagierendes Lichtbündel erzeugt, dessen Lichtintensität (Helligkeit) über die Breite und Höhe eines durch die Rotationachse und einen Radius der Becherform definierten Schnittes durch die Becherwand weitgehend konstant ist. Dadurch, dass die Lichtaustrittsfläche so angeordnet ist, dass in die Umfangsrichtung umgelenktes Licht über die Lichtaustrittsfläche aus dem Lichtleiter austritt, ergibt sich dann das erwünschte homogen hell leuchtende Erscheinungsbild.

Eine bevorzugte Ausgestaltung zeichnet sich dadurch aus, dass die becherförmige Grundform über einen mindestens 90° und insbesondere mindestens 180° großen Winkelbereich rotationsymmetrisch zu einer die Lichtquelle durchstoßenden Rotationsachse ist.

Bevorzugt ist auch, dass das Becherwandsegment die Form eines Zylindermantelsegments besitzt.

Ferner ist bevorzugt, dass das Becherwandsegment die Form eines Kegelstumpfsegments besitzt.

Bevorzugt ist auch, dass ein Winkel, den eine in einer Ebene mit der Rotationsachse liegende Wandlinie des Kegelstumpfsegments mit der Rotationsachse einschließt, kleiner als 3° ist.

Eine weitere bevorzugte Ausgestaltung zeichnet sich dadurch aus, dass das Becherbodensegment die Form eines Kreissegments besitzt.

Bevorzugt ist auch, dass das Becherbodensegment die Form eines Halbkreises besitzt.

Ferner ist bevorzugt, dass die erste Umlenkfläche parabolisch geformt ist.

Bevorzugt ist auch, dass, die zweite Umlenkfläche die Form eines Kegelmantels besitzt.

Eine weitere bevorzugte Ausgestaltung zeichnet sich dadurch aus, dass die Form des Becherwandsegments dadurch entsteht, dass die Form eines dreieckigen Lichtleiters an dem Außenrand des Becherbodensegments entlang zu einem Zylindermantelsegment gewickelt ist, so dass die lange Dreiecksseite des dreieckigen Lichtleiters eine schraubenlinienförmige und damit helixförmig angeordnete Schmalseite als dritte Umlenkfläche bildet.

Bevorzugt ist auch, dass die lange Seite durch Flächenstücke unterbrochen ist, die parallel zum im Lichtleiter in Richtung zur langen Seite propagierenden Licht ausgerichtet sind.

Ferner ist bevorzugt, dass zwischen dem Becherwandsegment und der Lichtaustrittsfläche ein weiteres Lichtleitersegment angeordnet ist, dessen Querschnitt sich in Lichtausbreitungsrichtung vergrößert.

Bevorzugt ist auch, dass eine Lichtaustrittsfläche eine Länge und eine Breite besitzt, wobei die Breite im Bereich von 2 mm bis 8 mm liegt und die Länge ein 2-faches bis 20-faches der Breite beträgt.

Eine weitere bevorzugte Ausgestaltung zeichnet sich dadurch aus, dass das Becherwandsegment eine grabenartige Vertiefung aufweist.

Bevorzugt ist auch, dass dass die dritte Umlenkfläche in zwei oder drei helixförmig angeordnete Teilflächen gleicher Ganghöhe aufgeteilt ist.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert.

Dabei zeigen, jeweils in schematischer Form:
- Figur 1: ein Ausführungsbeispiel einer erfindungsgemäßen Kraftfahrzeugbeleuchtungseinrichtung;
- Figur 2: eine Draufsicht auf eine Lichtaustrittsfläche eines Lichtleiters des Gegenstands der Fig. 1;
- Figur 3: eine Seitenansicht eines plattenförmig ebenen Lichtleiters;
- Figur 4: einen Merkmale der Erfindung aufweisenden Lichtleiter;
- Figur 5: einen Schnitt durch den Lichtleiter der Figur 4;
- Figur 6: Ausgestaltungen des Lichtleiters aus den Figuren 4 und 5;
- Figur 7: eine weitere Ausgestaltung des Lichtleiters aus den Figuren 4 und 5;
- Figur 8: eine Seitenansicht eines plattenförmig ebenen Lichtleiters mit einer gegenüber der Figur 3 veränderten Form;
- Figur 9: eine weitere Ausgestaltung eines plattenförmig dreieckigen Lichtleiters;
- Figur 10: eine weitere Ausgestaltung eines Merkmale der Erfindung aufweisenden Lichtleiters;
- Figur 11: einen dreiecksförmig plattenförmigen Lichtleiter, der die Form eines gleichseitigen Dreiecks besitzt;
- Figur 12: einen Schnitt durch einen Merkmale der Erfindung aufweisenden Lichtleiter;
- Figur 13: einen Schnitt durch eine andere Ausgestaltung eines Merkmale der Erfindung aufweisenden Lichtleiters;
- Figur 14: einen weiteren Dreieckslichtleiter;
- Figur 15: einen Schnitt durch den Dreieckslichtleiter nach der Figur 14;und
- Figur 16: drei Schnitte durch einen Lichtleiter, der die Grundform des in der Figur 1 dargestellten Lichtleiters besitzt.

Dabei bezeichnen gleiche Bezugszeichen in verschiedenen Figuren jeweils gleiche oder zumindest ihrer Funktion nach vergleichbare Elemente.

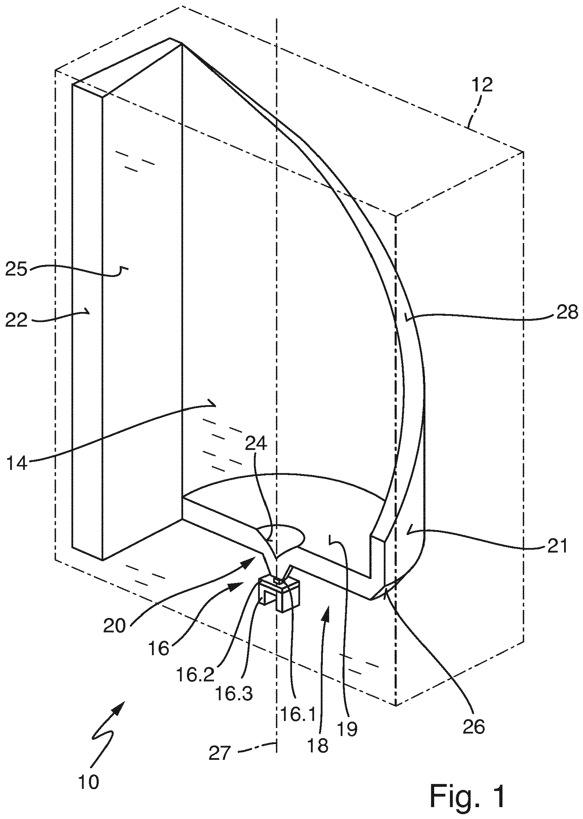

Figur 1 zeigt im Einzelnen eine Kraftfahrzeugbeleuchtungseinrichtung 10 mit einem Gehäuse 12 und einer Lichtaustrittsöffnung, die von einer transparenten Abdeckscheibe 14 abgedeckt wird. Im Inneren der Beleuchtungseinrichtung 10 ist eine Lichtquelle 16 und ein Lichtleiter 18 angeordnet. Der Lichtleiter 18 weist einen Einkoppelbereich 20, eine Lichtaustrittsfläche 22 und Umlenkflächen 24, 26, 28 auf.

Die Lichtquelle ist bevorzugt eine Halbleiterlichtquelle. Die Halbleiterlichtquelle weist bevorzugt eine Leuchtdiode 16.1 oder mehrere solche Leuchtdioden auf, die auf einer Platine 16.2 in thermischem Kontakt zu einem Kühlkörper 16.3 angeordnet sind. Die Halbleiterlichtquelle bildet zusammen mit der Platine 16.2 und dem Kühlkörper 16.3 bevorzugt eine Lichtquellenbaugruppe. Für Kraftfahrzeugleuchten werden üblicherweise Leuchtdioden verwendet, die eine rechteckige und ebene Lichtaustrittsfläche mit einer Kantenlänge zwischen 0,3 und 2 mm aufweisen. Besonders üblich sind Leuchtdioden, deren Lichtaustrittsfläche etwa 1 mm² groß sind.

Der Lichtleiter 18 weist ein Segment einer becherförmigen Grundform auf. Diese Grundform besitzt einen Becherboden mit einem Außenrand und einer Becherwand. Das Segment der becherförmigen Grundform weist ein Segment des Becherbodens auf, das im Folgenden als Becherbodensegment 19 bezeichnet wird.

Der Lichtleiter weist ein Segment der Becherwand auf, das im Folgenden als Becherwandsegment 21 bezeichnet wird. Das Becherwandsegment und das Becherbodensegment hängen einstückig und stoffschlüssig zusammen. Der Einkoppelbereich ist zumindest teilweise im Becherbodensegment angeordnet.

Die Lichtquelle 16 ist so dicht vor dem Einkoppelbereich angeordnet, dass von ihr ausgehendes Licht in den Einkoppelbereich eintritt. Der Einkoppelbereich weist auf seiner der Lichtquelle abgewandten Seite eine erste Umlenkfläche 24 auf, die der Lichtquelle 16 gegenüber liegt und die mit Licht beleuchtet wird, das von der Lichtquelle 16 ausgeht und über den Einkoppelbereich 20 in das Becherbodensegment 19 des Lichtleiters eintritt.

Die erste Umlenkfläche ist durch ihre Form und Lage dazu eingerichtet, auf sie einfallendes Licht der Lichtquelle radial zum Becherwandsegment 21 hin umzulenken. Zwischen dem Becherbodensegment 19 und dem Becherwandsegment 21 ist eine zweite Umlenkfläche 26 angeordnet. Die zweite Umlenkfläche ist durch ihre Form und Lage dazu eingerichtet, auf sie von der ersten Umlenkfläche 24 her einfallendes Licht in das Becherwandsegment zu richten. Dazu weist die zweite Umlenkfläche bevorzugt die Form einer Kegelmantelfläche auf. Die zweite Umlenkfläche begrenzt sowohl das Becherbodensegment als auch das Becherwandsegment.

Das Becherwandsegment weist eine helixförmig angeordnete dritte Umlenkfläche 28 auf.

Die zweite Umlenkfläche lenkt das auf sie eintreffende Licht zur dritten Umlenkfläche 28 hin um. Die dritte Umlenkfläche 28 ist eine der zweiten Umlenkfläche 26 gegenüberliegende und von der zweiten Umlenkfläche durch eine Mantelfläche des Becherwandsegmentes getrennte Grenzfläche des Becherwandsegments.

In dem Ausführungsbeispiel, das in der Figur 1 dargestellt ist, ist die Grundform des Bechers zylinderförmig, was aber nicht zwingend erforderlich ist. Bevorzugt ist aber eine Grundform, die über einen mindestens 90° und insbesondere mindestens 180° großen Winkelbereich rotationsymmetrisch zu einer die Lichtquelle 16 durchstoßenden Rotationsachse 27 ist. Durch die helixförmige und damit schraubenlinienförmige Anordnung der weiteren Umlenkfläche lenkt diese auf sie von der zweiten Umlenkfläche her einfallendes Licht in eine Umfangsrichtung des Becherwandsegmentes um. Das in die Umfangsrichtung des Becherwandsegmentes umgelenkte Licht wird durch den weiteren Verlauf des Becherwandsegmentes innerhalb des Becherwandsegmentes zur Lichtaustrittsfläche transportiert.

Im Ausführungsbeispiel, das in der Figur 1 dargestellt ist, liegt zwischen dem Becherwandsegment und der Lichtaustrittsfläche ein weiteres Lichtleitersegment, dessen Querschnitt sich in Lichtausbreitungsrichtung vergrößert und das bevorzugt einstückig mit dem übrigen Lichtleiter ist. Dadurch wird eine Parallelisierung des darin propagierenden Lichtes erzielt. Unter einer Parallelisierung wird hier eine Verringerung des Öffnungswinkels eines Lichtbündels verstanden. Die Lichtaustrittsfläche ist so angeordnet, dass in die Umfangsrichtung umgelenktes Licht so steil auf die Lichtaustrittsfläche auftrifft, dass es dort keine internen Totalreflexionen erfährt, sondern über die Lichtaustrittsfläche aus dem Lichtleiter austritt.

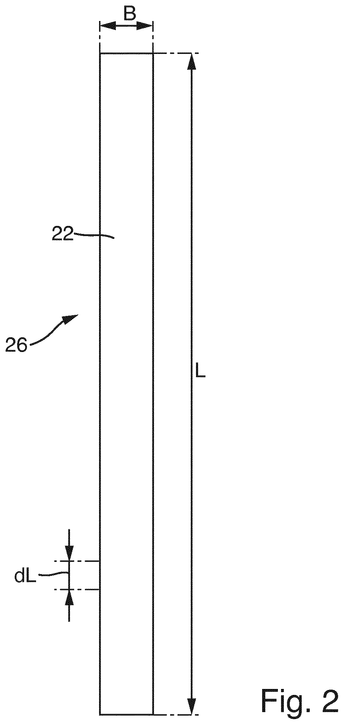

Fig. 2 zeigt eine Draufsicht auf die Lichtaustrittsfläche 22 des Lichtleitersegments 25 der gleichedes Lichtleiters 18 aus der Fig. 1. Die Blickrichtung ist dabei parallel zu dem Lot auf die Lichtaustrittsfläche und entgegen der Hauptaustrittsrichtung des über die Lichtaustrittsfläche 22 austretenden Lichtes ausgerichtet.

Die Lichtaustrittsfläche besitzt eine Länge L und eine Breite B. Die Breite B liegt bevorzugt im Bereich von 2 mm bis 8 mm. Die Länge L beträgt bevorzugt ein Vielfaches der Breite, insbesondere ein 2-faches bis 50-faches der Breite. Über diese Lichtaustrittsfläche 22 tritt das Licht der Lichtquelle 16 aus dem Lichtleiter 18 aus. Beispiele der oben genannten Halbleiterlichtquellen besitzen eine Lichtaustrittsfläche in der Größenordnung von 1 mm². Sie können im Vergleich zu der Lichtaustrittsfläche des Lichtleiters als nahezu punktförmige Lichtquellen betrachtet werden.

Die oben angegebene Aufgabe, eine regelkonforme Signallichtverteilung zu erzeugen und dabei ein homogen helles Erscheinungsbild der Lichtaustrittsfläche des Lichtleiters zu bieten, dessen Licht die Lichtverteilung generiert, lässt sich insbesondere dann erfüllen, wenn über jedes Längenelement dL der Lichtaustrittsfläche 22 der gleiche Lichtstrom fließt und die Richtung der den Lichtstrom bildenden Lichtstrahlen durch die Lichtleitergeometrie konstruktiv wählbar ist. Ein Beispiel einer bevorzugten Richtungswahl besteht darin, dass die Lichtstrahlen parallel zueinander sind.

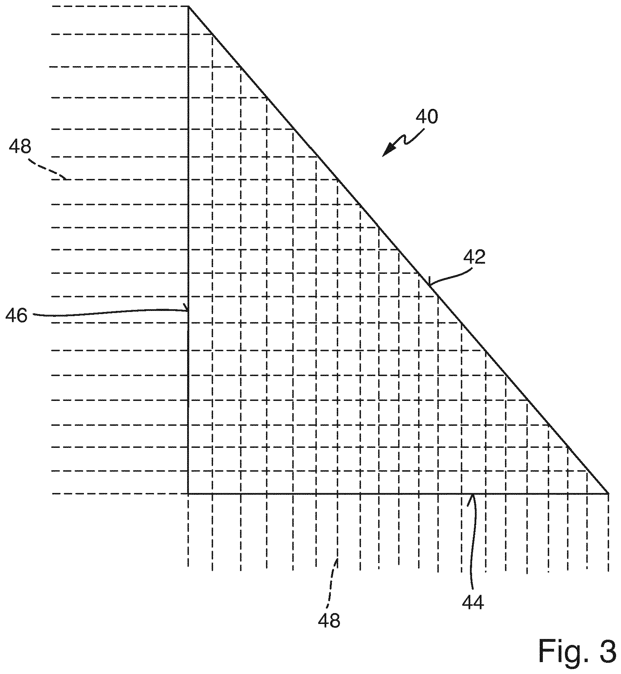

Figur 3 zeigt eine Seitenansicht eines plattenförmig ebenen Lichtleiters 40. Dieser Lichtleiter hat die Form eines gleichschenkligen Dreiecks. Die lange Dreiecksseite 42 schließt mit jeder der beiden kurzen Dreiecksseiten 44, 46 einen Winkel von 45° ein. Die Seiten sind dabei die in dieser Blickperspektive sichtbaren Kanten schmaler Seiten des plattenförmigen Lichtleiters. Die untere Seite soll hier eine Lichteintrittsseite 44 sein, über welche pro Längeneinheit der gleiche Lichtstrom in den Lichtleiter eintritt. Die gestrichelt dargestellten Lichtstrahlen 48 sollen parallel zueinander sein und senkrecht zur Lichteintrittsseite auf diese einfallen, so dass sie beim Eintritt in den Lichtleiter keine Richtungsänderung erfahren.

Die eingekoppelten Lichtstrahlen 48 werden dann an der langen Dreiecksseite 42 durch interne Totalreflexionen um 90° umgelenkt. Dabei bleibt die Parallelität und die Dichte der Lichtstrahlen 48 erhalten. Das derart umgelenkte Licht fällt dann von innen senkrecht auf die Lichtaustrittsfläche 46 und tritt ohne Richtungsänderung und damit ebenfalls unter Beibehaltung der Parallelität und der Lichtstromdichte über die Lichtaustrittsfläche 46 aus. Das ausgetretene Licht erfüllt die Forderungen nach einer wählbaren Richtung, die im dargestellten Beispiel durch zueinander parallele Lichtstrahlen repräsentiert wird, und einem homogenen Erscheinungsbild. Dieser Effekt basiert hier aber auf der Voraussetzung, dass bereits das auf die Lichteintrittsfläche 44 einfallende Licht ebenfalls diese Forderungen erfüllt. Dies ist aber für Licht, das von einer Halbleiterlichtquelle ausgeht, nicht der Fall.

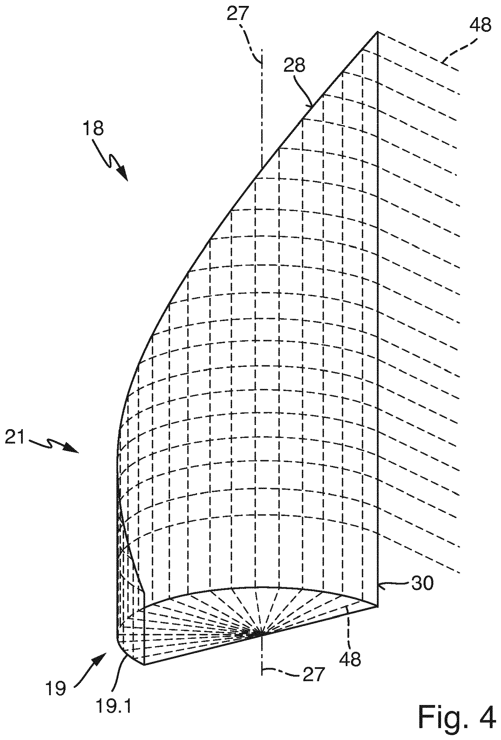

Fig. 4 zeigt, wie man mit einer nahezu punktförmigen Lichtquelle, wie sie in Form von einer der oben angegebenen Halbleiterlichtquellen zur Verfügung steht, eine homogene Beleuchtung einer Lichtaustrittsfläche mit parallelem Licht erzeugt, wobei die Beleuchtung aus dem Inneren des Lichtleiters heraus erfolgt. Fig. 4 zeigt insbesondere einen Lichtleiter, der eine becherförmige Grundform besitzt, welche Grundform einen Becherboden mit einem Außenrand und eine Becherwand aufweist, wobei der Lichtleiter 18 ein Segment des Becherbodens, also ein Becherbodensegment 19, und ein Segment der Becherwand, also ein Becherwandsegment 21 aufweist. Das Becherbodensegment besitzt hier die Form eines Kreissegments, insbesondere eines Halbkreises.

Die Form des Becherwandsegments entsteht dadurch, dass der dreieckige Lichtleiter aus der Figur 3 gedanklich an dem Außenrand 19.1 des Becherbodensegments 19 entlang zu einem Zylindermantelsegment gewickelt wird. Aus der langen Dreiecksseite 42 des plattenförmigen Lichtleiters 40 aus der Figur 3 entsteht dabei eine schraubenlinienförmig und damit helixförmig angeordnete Schmalseite, die mit jedem von unten ankommenden Lichtstrahl einen Winkel von 45° bildet und diesen deshalb durch eine interne Totalreflexion um 90° in die Umfangsrichtung umlenkt. Die parallel zur Rotationsachse 27 des Zylindermantels im Becherwandsegment verlaufenden Strahlen verlaufen nach der Umlenkung an der helixförmigen Umlenkfläche 28 auf einer zur Rotationsachse 27 senkrechten Kreisbahn innerhalb des hier Zylindermantelsegment-förmigen Becherwandsegments 21, bis sie auf die Lichtaustrittsfläche 30 stoßen. Die helixförmige Umlenkfläche 28 lenkt das auf sie einfallende Licht also insbesondere in eine Umfangsrichtung des Segments der Becherwand um. Die Lichtaustrittsfläche 30 ist so angeordnet, dass in Umfangsrichtung umgelenktes Licht über die Lichtaustrittsfläche in der gewünschten Art und Weise aus dem Lichtleiter austritt.

Im Vergleich zu dem ebenen Dreieckslichtleiter aus der Fig. 3 weist der Lichtleiter aus der Fig. 4 den Vorteil auf, dass das im Becherwandsegment mit homogener Lichtstromdichte und paralleler Ausrichtung propagierende Licht in einfacher Weise erzeugt werden kann. Hierzu wird die Lichtquelle, die bevorzugt eine Halbleiterlichtquelle ist, in der Verlängerung der Rotationsachse 27 dicht vor dem Becherbodensegment angeordnet. Unter einer dichten Anordnung wird hier eine Anordnung in einem Abstand zum Becherbodensegment verstanden, der im Bereich von 0,1 mm bis 2 mm liegt.

Mittels eines Einkoppelbereichs, wie er zum Beispiel in der eingangs genannten EP 780 265 B1 beschrieben ist und wie er in der Fig. 1 als Einkoppelbereich 20 abgebildet ist, wird das vom Durchstosspunkt der Achse 27 durch das Becherbodensegment 19 ausgehende Licht der Lichtquelle zunächst in radialer Richtung zum Zylinder gelenkt. Beim Einkoppelbereich 20 der Fig. 1 erfolgt diese Umlenkung duch die erste Umlenkfläche 20. Eine nahezu punktförmige Halbleiterlichtquelle (leuchtende Chip - Fläche einer Leuchtdiode typischerweise ungefähr gleich 1 mm²) gibt in gleich große Sektoren des Becherbodensegments gleich große Lichtmengen ab, so dass sich bei einer Normierung auf ein Winkelsegment eine als Funktion des Winkels konstante Lichtstromdichte ergibt.

Durch eine längs der halbkreisförmigen Schnittlinie 19'1 zwischen dem hier ebenen Becherbodensegment 19 und dem hier Zylindermantelsegment-förmigen Becherwandbereich 21 verlaufende Umlenkfläche wird die radiale Ausbreitungsrichtung in eine parallel zur Rotationsachse 27 verlaufende Ausbreitungsrichtung umgelenkt. In der Fig. 1 ist die zweite Umlenkfläche 26 eine solche Umlenkfläche. Als Folge der zweiten Umlenkung und der dritten Umlenkung geht die vor diesen Umlenkungen in Bezug auf den Winkel konstante Lichtstromdichte in eine nach der Umlenkung pro Längenelement dL der Lichtaustrittsfläche konstante Lichtstromdichte über.

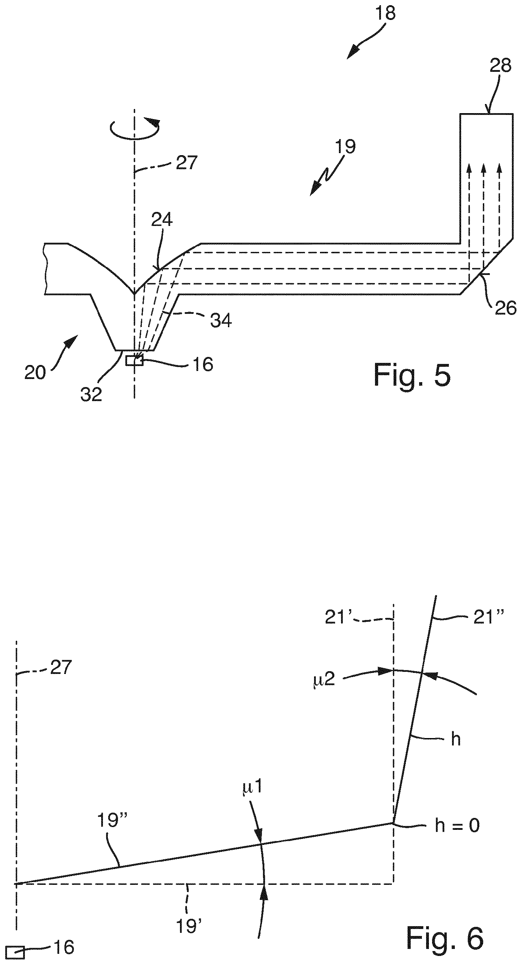

Figur 5 zeigt einen Schnitt durch den Lichtleiter 18. Die Schnittebene wird durch die Rotationsachse 27 und einen Radius des Becherbodensegmentes 19 aufgespannt. Die von der Lichtquelle 16 ausgehenden Lichtstrahlen 34 dringen in den Einkoppelbereich des Lichtleiters 18 ein, wobei sie an der Lichteintrittsfläche 32 des Einkoppelbereichs gebrochen werden. Dann erfahren sie an der ersten Umlenkfläche 24 bevorzugt interne Totalreflexionen. In einer alternativen Ausgestaltung weist die erste Umlenkfläche 24 eine reflektierende Beschichtung auf. Die erste Umlenkfläche ist vorzugsweise gekrümmt gestaltet und kommt im Querschnitt einer Parabel sehr nahe. Die Abweichung von der reinen Parabel ergibt sich aus der Brechung beim Lichteintritt und der Forderung, dass das von der ersten Umlenkfläche 24 längs eines bestimmten Radius' ausgehende Licht in sich parallel sein soll. Als Folge dieser Brechung scheint die Lichtquelle, wenn man sie gedanklich von der ersten Umlenkfläche aus betrachtet, in einem größeren Abstand von der Lichteintrittsfläche angeordnet zu sein als dies tatsächlich der Fall ist. Im Idealfall ist die erste Umlenkfläche parabolisch geformt, und die Lichtquelle ist in einem solchen Abstand von der Lichteintrittsfläche angeordnet, dass das Licht der Lichtquelle für einen gedachten Betrachter, der die die erste Lichtquelle von der ersten Umlenkfläche aus betrachtet, aus dem Brennpunkt der parabolischen Umlenkfläche zu kommen scheint.

In diesem Fall ist das von der ersten Umlenkfläche 24 ausgehende reflektierte Licht der Lichtquelle in der Schnittebene parallel ausgerichtet und breitet sich radial zur zweiten Umlenkfläche 26 hin aus. Die zweite Umlenkfläche besitzt bevorzugt die Form eines Kegelmantels, und sie steht wegen des Reflexionsgesetzes senkrecht auf der Winkelhalbierenden zwischen den ankommenden und den reflektierten Strahlen. Im Beispiel, das in der Fig. 5 dargestellt ist, erfolgt an der zweiten Umlenkfläche eine Umlenkung um 90°, Damit ergibt sich ein Anstellwinkel von 90°/2 = 45° zwischen der zweiten Umlenkfläche und den darauf einfallenden parallelen Strahlen.

Nach dieser zweiten Umlenkung breitet sich das Licht im Becherwandsegment nahezu parallel zur Zylinderachse 27 aus, bis es auf die in den Figuren 1 und 4 dargestellte helixförmig verlaufende und eine dritte Umlenkfläche 28 bildende Grenzfläche des Becherwandsegmentes trifft. Wie bereits erwähnt wurde, wird es dort in Umfangsrichtung des Becherwandsegmentes umgelenkt und breitet sich anschließend der Kreissegmentform des Becherwandsegmentes folgend in zur Zylinderachse senkrechten Ebenen aus. Anschließend tritt es durch die Lichtaustrittsfläche aus, die in einem Ausführungsbeispiel so angeordnet ist, dass ihre Längsausdehnung parallel zur Zylinderachse verläuft. Die Breite der Lichtaustrittsfläche entspricht hier der Dicke des Lichtleiters. Rein gedanklich entsteht das Becherbodensegment der Fig. 5 aus dem in der Fig. 5 dargestellten Radialschnitt durch eine Rotation um die Zylinderachse. In diesem Sinne kann der in der Fig. 5 sichtbare Radialschnitt des Becherbodensegmentes als eine das Becherbodensegment erzeugende Fläche betrachtet werden. Der in der Fig. 5 ebenfalls dargestellte Teil des Becherwandsegmentes wird für diese gedankliche Konstruktion nicht berücksichtigt.

Figur 6 zeigt schematisch Ausgestaltungen des Lichtleiters aus der Figur 5. Für die schematische Darstellung wird dabei der Teil des Radialschnitts der Fig. 5, der das Becherbodensegment darstellt, in der Fig. 6 durch eine erste Linie 19' repräsentiert, und der Teil des Radialschnitts der Fig. 5, der das Becherwandsegment darstellt, wird in der Fig. 6 durch eine zweite Linie 21' repräsentiert. Die erste Linie 19' kann in diesem Sinne als Erzeugende des Becherbodensegmentes betrachtet werden. Der Winkel zwischen der Erzeugenden 19' und der Rotationsachse 27 beträgt bei einem ebenen Becherbodensegment konstant 90°.

Das beim Gegenstand der Fig. 5 ebene Becherbodensegment wird bei Verwendung einer Erzeugenden 19", die mit der Zylinderachse 27 einen von 90° abweichenden, konstanten Winkel 90° minus µ1 einschließt, zu einem Kegel. Die Spitze des Kegels ist dabei durch einen Einkoppelbereich ersetzt, der bevorzugt so ausgestaltet ist, dass eingekoppeltes Licht parallel zur Richtung einer Erzeugenden 19" propagiert. Im Fall der Erzeugenden 19' ist µ1 gleich0.

Das beim Gegenstand der Fig. 5 Zylindermantelsegmentförmige Becherwandsegment wird bei Verwendung einer Erzeugenden 21", die mit der Zylinderachse einen von 0° abweichenden, konstanten Winkel µ2 einschließt, zu einem Kegelstumpf. Die Zylinderachse ist in einem solchen Fall korrekter durch den allgemeineren Begriff der Becherachse oder Rotationsachse 27 zu bezeichnen. In jedem Fall soll es sich bei der Becherachse bevorzugt um eine zentrale Rotationsachse handeln. Die Winkel µ1 und µ2 können sowohl größer als Null als auch kleiner als Null sein.

Änderungen des Winkels µ1 können zum Beispiel erforderlich sein, um die Form des Lichtleiters dem zur Verfügung stehenden Bauraum anzupassen. Während Änderungen des Winkels u1 keinen lichttechnischen Einfluss haben, beeinflusst eine Änderung des zweiten Winkels u2 die längs der Länge L der Lichtaustrittsfläche auftretende Lichtstromdichte. Bei einem Höhenpunkt h des Becherwandsegments ist das Verhältnis der Lichtmenge, die an einem dem Höhenpunkt h zugeordneten Punkt der Lichtaustrittsfläche pro Längeneinheit der Lichtaustrittsfläche auftritt, zu der Lichtmenge, die an einem dem Höhenpunkt h = 0 zugeordneten Punkt der Lichtaustrittsfläche pro Längeneinheit der Lichtaustrittsfläche auftritt, gleich r / (r + h*tan(µ2)).

Für positive Winkelwerte bis 90° ist der Tangens positiv, so dass der Wert des Bruchs im Winkelintervall zwischen 0° für 90° mit zunehmendem Winkel kleiner wird. Höheren h-Werten zugehörige Punkte der Lichtaustrittsfläche werden daher schwächer beleuchtet als weniger hohen h-Werten zugehörige Punkte der Lichtaustrittsfläche, was eine unerwünschte Inhomogenität des Erscheinungsbildes der leuchtenden Lichtaustrittsfläche hervorruft.

Der Winkel µ2 sollte deshalb klein gewählt werden, um solche unerwünschten Änderungen ebenfalls klein zu halten. In einer bevorzugten Ausgestaltung ist der Winkel µ2 kleiner als 3°.

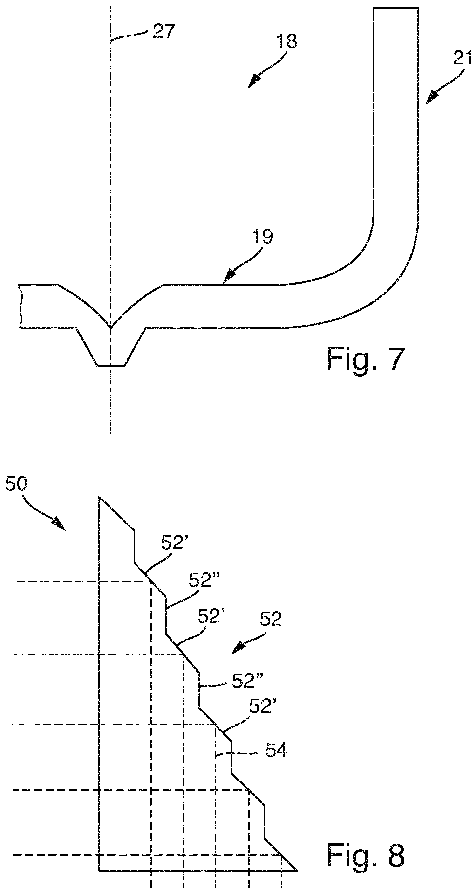

Figur 7 zeigt eine weitere Ausgestaltung des Lichtleiters aus der Figur 5. Die in der Figur 7 dargestellte Ausgestaltung unterscheidet sich von der in der Figur 5 dargestellten Ausgestaltung dadurch, dass die zweite Umlenkfläche 26 des Gegenstands der Fig. 5, die zwischen dem Becherbodensegment und dem Becherwandsegment verläuft, durch eine knickfrei verlaufende Krümmung des Lichtleiters 18 im Übergangsbereich zwischen dem Becherbodensegment und dem Becherwandsegment ersetzt ist.

Figur 8 ist als Pendant zur Fig. 3 zu betrachten. In der Figur 3 spiegelt die gesamte Hypotenuse 42 des dreieckigen Lichtleiters Licht in Richtung der Lichtaustrittsfläche 46, sodass diese lückenlos hell erscheint. Im Gegensatz dazu zeigt die Figur 8 einen plattenförmigen und dreieckigen Lichtleiter 50, bei dem die als Umlenkfläche dienende lange Seite in mehrere einzelne Abschnitte 52' unterteilt ist. Hier ist die lange Seite durch Flächenstücke 52" unterbrochen, die parallel zum im Lichtleiter in Richtung zur langen Seite 52 propagierenden Licht 54 ausgerichtet sind. Diese Unterbrechungen führen natürlich dazu, dass die Bereiche der Austrittsfläche, die diesen vertikalen Bereichen 52" zugeordnet sind, nicht hell erscheinen. Das Verhältnis der Breite der hellen zu den dunklen Bereichen auf der Austrittsfläche 56 wird in einfacher Weise durch die Anzahl und die Länge der vertikalen Bereiche 52", die in die Hypotenuse eingefügt werden, festgelegt. Ist dieses Verhältnis über die gesamte Länge der Austrittsfläche konstant, erscheint der Lichtleiter aus großer Entfernung (einige Meter) wiederum völlig homogen ausgeleuchtet, da der menschliche Sehsinn den hell/dunkel - Wechsel bei hinreichend kleinen Abschnitten 52', 52" nicht mehr auflösen kann. Insgesamt erhält man auf diese Weise die Möglichkeit, die gesamte Länge L der Austrittsfläche zu vergrößern.

Natürlich ist auch der Dreieckslichtleiter nach Figur 8 wiederum auf einen kreissegmentförmigen Außenrand eines Becherbodensegments aufzuwickeln, wie es unter Bezug auf die Figuren 3 und 4 für den dreiecksförmigen Lichtleiter aus der Figur 3 beschrieben worden ist.

Die Hypotenusenabschnitte werden dadurch wiederum zu Abschnitten einer helixförmigen dritten Umlenkfläche und die zwischen zwei solchen Abschnitte liegenden Flächenstücke werden zu Stücken, die parallel zur Zylinderachse auf dem Zylindermantel verlaufen und die keine umlenkende Wirkung entfalten.

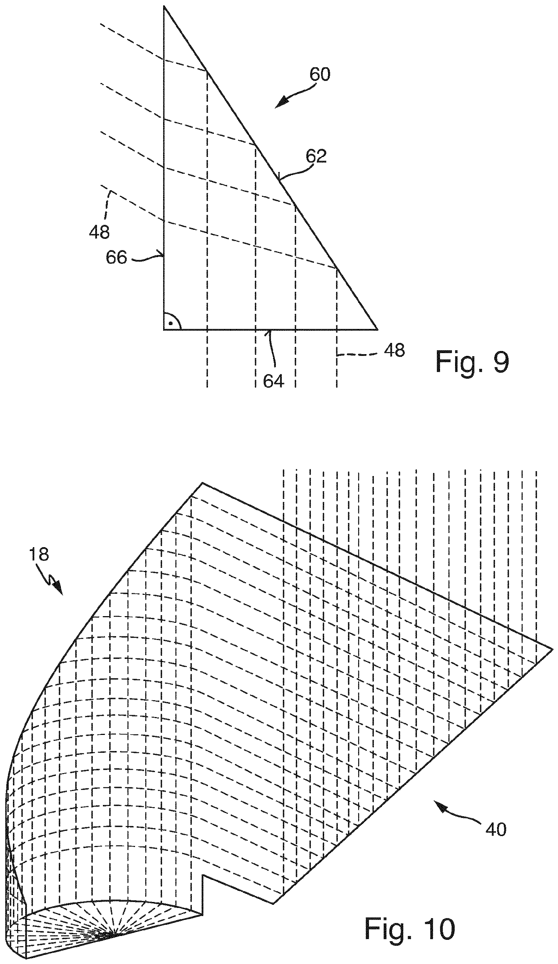

Figur 9 zeigt eine weitere Ausgestaltung eines plattenförmig dreieckigen Lichtleiters 60. Diese Ausgestaltung zeichnet sich dadurch aus, dass der Winkel der Hypotenuse zu den Katheten nicht 45° beträgt, wie es beim Gegenstand der Figur 2 der Fall ist. Als Folge des vom 45°-Wert abweichenden Wertes werden die von der Lichteintrittsseite 64 her einfallenden Lichtstrahlen 48 an der langen Hypotenusenseite entsprechend dem Reflexionsgesetz nicht mehr rechtwinklig umgelenkt. Die umgelenkten Strahlen treffen daher auch nicht rechtwinklig auf die Lichtaustrittsfläche 66 auf. Dies führt dazu, dass die Strahlen 48 beim Austritt aus dem Lichtleiter 60 infolge der Brechung eine für alle Strahlen gleiche Richtungsänderung erfahren. In einer Ausgestaltung wird die Lichtaustrittsfläche 66 so angeordnet dass sie senkrecht zu den vom Inneren des Lichtleiters 60 her einfallenden Strahlen liegt, so dass beim Lichtaustritt keine Richtungsänderung auftritt.

Wie man der Fig. 9 entnimmt, lässt sich mit den von 45° abweichenden Winkeln zwischen den Katheten und der Hypotenuse jedenfalls die Lichtstromdichte der Lichtaustrittsfläche im Vergleich zur Lichtstromdichte der Lichteintrittsfläche ändern. Beim Gegenstand der Fig. 9 ist der Winkel zwischen der Lichteintrittsseite 64 und der als dritte Umlenkfläche dienenden langen Seite 62 größer als der Winkel zwischen der Lichtaustrittsseite 66 und der als dritte Umlenkfläche dienenden langen Seite 62. In diesem Fall ergibt sich auf der Lichtaustrittsseite eine größere Lichtstromdichte als auf der Lichteintrittsseite 64. In einer alternativen Ausgestaltung ist der Winkel zwischen der Lichteintrittsseite und der als dritte Umlenkfläche dienenden langen Seite kleiner als der Winkel zwischen der Lichtaustrittsseite und der als dritte Umlenkfläche dienenden langen Seite. Dann ergibt sich auf der Lichtaustrittsseite eine kleinere Lichtstromdichte als auf der Lichteintrittsseite.

Natürlich ist auch der Dreieckslichtleiter nach Figur 9 wiederum auf einen kreissegmentförmigen Außenrand eines Becherbodensegments aufzuwickeln, wie es unter Bezug auf die Figuren 3 und 4 für den dreiecksförmigen Lichtleiter aus der Figur 3 beschrieben worden ist. Nach dem Aufwickeln auf den Zylinder wird die Hypotenuse 62 wiederum zu einer helixförmigen Umlenkfläche, die aber im Unterschied zum Gegenstand der Figur 4 eine andere Ganghöhe aufweist. Nach der Reflexion an der helixförmigen Umlenkfläche verlaufen die Strahlen in Umfangsrichtung und besitzen gleichzeitig eine zur Becherachse parallele Richtungskomponente, sodass sie in dem Becherwandabschnitt entlang einer Helix (mit kleinerer Ganghöhe als der Ganghöhe der helixförmigen Umlenkfläche) um die Becherachse herum verlaufen, bis sie über die Lichtaustrittsfläche aus dem Lichtleiter austreten.

Figur 10 zeigt eine weitere Ausgestaltung. Diese Ausgestaltung nutzt den Lichtleiter 18 aus Figur 4 als Lichtquelle für den ebenen Lichtleiter 40 aus Figur 3, wobei beide Lichtleiter beim Gegenstand der Figur 10 ein einstückig-stoffschlüssig zusammenhängendes Bauteil bilden. Anstelle des ebenen Lichtleiters 40 aus der Fig. 3 kann der zweite, ebene Lichtleiter auch der in der Figur 8 dargestellte Lichtleiter 50 oder der in der Figur 9 dargestellte Lichtleiter 60 sein. Analog dazu kann der erste zylindrisch aufgewickelte Lichtleiter 18 beim Gegenstand der Fig. 10 auf dem in der Figur 4 dargestellten Lichtleiter 18 oder dem in der Figur 6 dargestellten Lichtleiter oder dem in der Figur 7 dargestellten Lichtleiter basieren.

Bis auf die Ausgestaltungen mit µ1 und/oder µ2 ungleich 0 zeichnen sich alle bis hier vorgestellten Ausgestaltungen dadurch aus, dass an ihrer jeweiligen Lichtaustrittsfläche paralleles Licht ankommt und durch jedes Längenelement dL der Lichtaustrittsfläche dieselbe Lichtmenge austritt. Wie bereits erwähnt, muss eine Signallichtverteilung einer Kraftfahrzeugleuchte eine Breite von etwa 2 x 20° und eine Höhe von 2 x 10° aufweisen. Ein Vorteil der Erfindung besteht nun gerade darin, dass man diese Forderung mit Hilfe einer Vielzahl identischer Streuelemente erfüllen kann, die mit dem parallelen Licht beleuchtet werden.

Dadurch dass die Streuelemente identisch sind und jedes Streuelement mit der gleichen Lichtstromdichte beleuchtet wird, erscheinen diese auch im leuchtenden Zustand identisch. Als erwünschte Folge ergibt sich eine völlig homogen strahlende Lichtaustrittsfläche. Die Streuelemente können dabei auf allen drei Flächen eines der hier vorgestellten Dreieckslichtleiter angeordnet sein. Nach der Aufwicklung auf den Zylinder sind dies also die Reflexionsfläche am Übergang von dem Becherbodensegment zum Becherwandsegment, die helixförmig angeordnete dritte Umlenkfläche und die die Lichtaustrittsfläche. Die Homogenität geht allerdings verloren, wenn Streuelemente auf einer Reflexionsfläche angeordnet sind. Die Homogenität bleibt erhalten, wenn die Streuelemente auf der Lichtaustrittsfläche angeordnet sind.

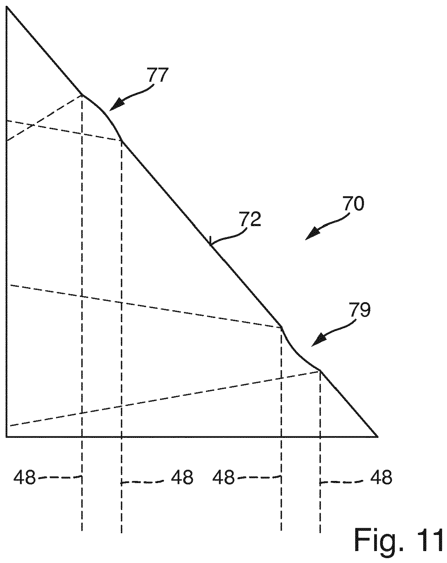

Figur 11 zeigt einen dreiecksförmig plattenförmigen Lichtleiter, der die Grundform eines gleichseitigen Dreiecks besitzt. Natürlich ist auch der Dreieckslichtleiter nach Figur 11 auf einen kreissegmentförmigen Außenrand eines Becherbodensegments aufzuwickeln, wie es unter Bezug auf die Figuren 3 und 4 für den dreiecksförmigen Lichtleiter aus der Figur 3 beschrieben worden ist.

Beim Gegenstand der Figur 11 ist jeweils eine zylindrischkonvexe, den Öffnungswinkel auftreffenden Lichtes vergrößernde Streufacette 77 und eine zylindrisch-konkave, den Öffnungswinkel auftreffenden Lichtes verkleinernde Streufacette 79 auf der langen Dreiecksseite angeordnet, beziehungsweise in diese eingeformt. Die lange Dreiecksseite 27 entspricht der helixförmig angeordneten dritten Umlenkfläche 28 des Gegenstand der Fig. 1. Unter einer zylindrischen Facette wird hierbei eine Facette verstanden, deren Form der Form eines Teils eines Zylindermantels entspricht, wobei die zugehörige Zylinderachse senkrecht auf der Zeichnungsebene steht.

In einer bevorzugten Ausgestaltung wird die komplette helixförmig angeordnete dritte Umlenkfläche mit solchen oder anderen Streuelementen versehen, wobei entweder die eine Sorte oder die andere Sorte oder eine Mischung aus beiden Sorten verwendet wird. Eine weitere Möglichkeit besteht darin, an Stelle einer Belegung von nur einer Seite zwei oder drei Seiten mit entsprechend weniger stark streuenden Streuelementen zu versehen, sodass sich deren Wirkung zur gewünschten Gesamtwirkung addiert.

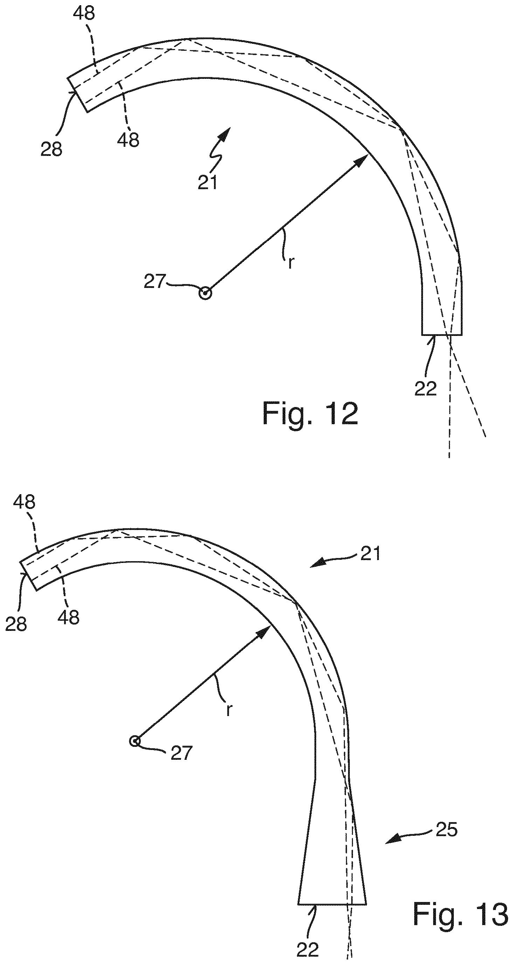

Figur 12 zeigt einen Schnitt, der senkrecht zur Becherachse durch ein hier Zylindermantelsegment-förmiges Becherwandsegment liegt. Die helixförmig angeordnete dritte Umlenkfläche erscheint hier als die kurze Kante 28 bei a. Die beiden gestrichelt dargestellten Lichtstrahlen 48 werden an der helixförmig angeordneten und hier als Kante erscheinenden dritten Umlenkfläche 28 in der Schnittebene parallel zueinander in Umfangsrichtung des Becherwandsegments 21 umgelenkt. Vor der Umlenkung verlaufen sie senkrecht zur Zeichnungsebene. Abhängig von der Radialkoordinate ihrer Umlenkung treffen die beiden Strahlen an unterschiedlichen Stellen auf den außenliegenden Zylindermantel. Als Folge geht ihre Parallelität verloren. Das aus der Lichtaustrittsfläche austretende Lichtbündel weist also einen von 0° abweichenden Öffnungswinkel auf, der durch eine beim Lichtaustritt auftretende Brechung noch vergrößert sein kann. Falls dieser Öffnungswinkel größer ist als der für eine regelkonforme Lichtverteilung erwünschte Öffnungswinkel, kann dies durch die in Figur 13 dargestellte Ausgestaltung korrigiert werden.

Figur 13 zeigt analog zur Figur 12 einen Schnitt, der senkrecht zur Becherachse 27 durch ein hier Zylindermantelsegment-förmiges Becherwandsegment 21 liegt. Die helixförmig angeordnete dritte Umlenkfläche 28 erscheint auch hier als eine kurze Kante. Im Unterschied zum Gegenstand der Fig. 12 weist die in der Figur 13 dargestellte Ausgestaltung am Lichtaustrittsende des Becherwandsegments ein als Parallelisierungsbereich dienendes Lichtleitersegment 25 auf, in dem sich die Wandstärke des Becherwandabschnitts mit zunehmender Annäherung an die Lichtaustrittsfläche 22 vergrößert. Die Flächennormalen der inneren Grenzflächen des Parallelisierungsbereichs weisen bei dieser Geometrie zwangsläufig eine in Richtung der Aufweitung und damit zur Lichtaustrittsfläche 22 weisende Richtungskomponente auf. Da die Flächennormale in einem Flächenpunkt jeweils eine Winkelhalbierende zwischen dem in diesem Punkt einfallenden und dem von diesem Punkt ausgehenden reflektierten Strahl bildet, überträgt sich diese Richtungskomponente auf den reflektierten Strahl. Dies führt dazu, dass sich der Öffnungswinkel des Lichtbündels, dessen Strahlen in dem Parallelisierungsbereiche Reflexionen erfahren, verringert. Unter einer Parallelisierung wird hier eine solche Verringerung des Öffnungswinkels verstanden, auch wenn das Ergebnis nicht zu eine vollständigen Parallelität (Öffnungswinkel =0) führt.

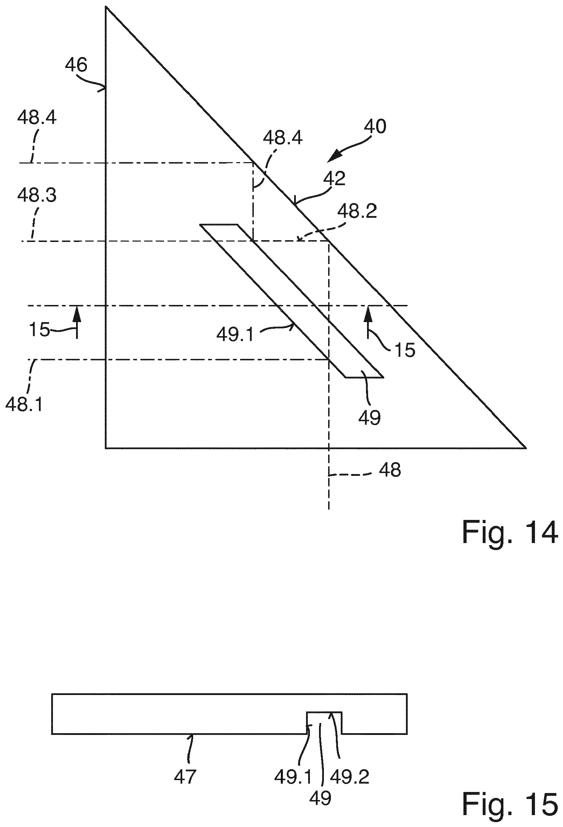

Die Figur 14 ist als Pendant zur Figur 3 zu betrachten. Sie zeigt einen Dreieckslichtleiter 40. Auch dieser Dreieckslichtleiter 40 ist wiederum auf einen kreissegmentförmigen Außenrand eines Becherbodensegments aufzuwickeln, wie es unter Bezug auf die Figuren 3 und 4 für den dreiecksförmigen Lichtleiter aus der Figur 3 beschrieben worden ist.

Fig. 15 zeigt einen Schnitt 15-15 durch den Dreieckslichtleiter nach der Fig. 14. Der Dreieckslichtleiter besitzt eine grabenartige Vertiefung 49 in einer seiner breiten Plattenflächen 47. Die grabenartige Vertiefung weist Seitenwände 49.1 und einen Boden 49.2 auf. Die Seitenwände sind bevorzugt senkrecht zu den breiten Plattenflächen 47 angeordnet.

Von unten in den Lichtleiter eintretendes Licht 48, das sich längs der gestrichelt dargestellten Strahlrichtung ausbreitet, trifft entweder auf eine erste Seitenwand 49.1 der grabenartigen Vertiefung und wird dort in die gepunktet dargestellte Richtung reflektiert, oder es läuft unter der grabenartigen Vertiefung hindurch und wird an der langen Dreiecksseite reflektiert. Das an der langen Dreiecksseite reflektierte Licht 48.2 läuft entweder unter der grabenartigen Vertiefung entlang der gestrichelt dargestellten Richtung 48.3 weiter (dieser Strahl verläuft also so, als ob die grabenartige Vertiefung nicht vorhanden wäre), oder es wird zunächst an der zweiten Seitenwand 49.2 der grabenartigen Vertiefung 49 in die strichpunktiert dargestellte Richtung reflektiert 48.4, woraufhin es erneut auf die lange Dreiecksseite trifft und dort erneut reflektiert wird, bevor es, wie das andere Licht auch, letztlich über die Lichtaustrittsfläche 46 ausgekoppelt wird.

Wie Figur 14 für einen einzelnen in den Lichtleiter eintretenden Strahl zeigt, wird das eintretende Licht 48 als Folge der grabenartigen Vertiefung 49 in drei Teile 48.1, 48.2, 48.3 aufgeteilt, die an verschiedenen Stellen der Lichtaustrittsfläche 46 austreten, wobei die drei Anteil parallel zueinander ausgerichtet sind. Je nach Tiefe der grabenartigen Vertiefung können so unterschiedliche Anteile unter Beibehaltung der Parallelität verlagert werden, um zum Beispiel eine sonst auftretende Inhomogenität im Erscheinungsbild der Lichtaustrittsfläche zu vermeiden oder zu verringern.

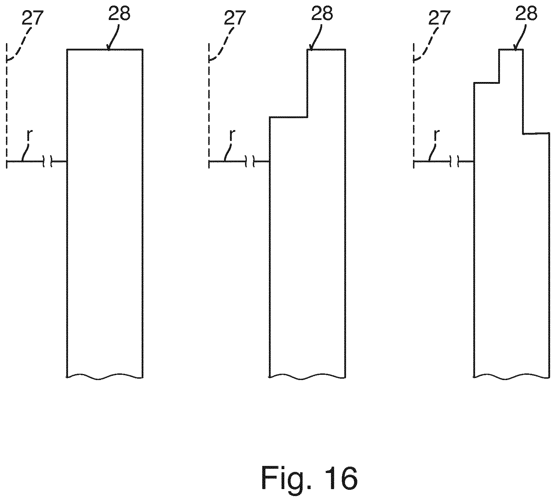

Figur 16 zeigt drei Schnitte durch einen Lichtleiter 18, der die Grundform des in der Figur 1 dargestellten Lichtleiters besitzt, wobei die Schnittebene jeweils so liegt, dass die Rotationsachse 27 in der Schnittebene liegt. Links ist eine Ausgestaltung dargestellt, wie sie bis hier beschrieben wurde und zum Beispiel in der Figur 1 abgebildet ist. In der Figur 16 ist die jeweils obere Kante ein Schnitt durch die helixförmig angeordnete dritte Umlenkfläche 28. Bei der in der Mitte dargestellten Ausgestaltung ist die dritte Umlenkfläche 28 in zwei helixförmig angeordnete Teilflächen gleicher Ganghöhe aufgeteilt, was in einer Abwicklung des Becherwandsegments einem Dreieck mit zwei parallel verlaufenden langen Dreiecksseiten entspricht. Bei der rechts dargestellten Ausgestaltung ist die dritte Umlenkfläche 28 in drei helixförmig angeordnete Teilflächen gleicher Ganghöhe aufgeteilt, was in einer Abwicklung des Becherwandsegments ein Dreieck mit drei parallel verlaufenden langen Dreiecksseiten entspricht.

Mit Ausnahme der Ausgestaltungen, die eine grabenartige Vertiefung aufweisen und mit Ausnahme der in der Figur 16 dargestellten Ausgestaltungen haben alle in dieser Anmeldung vorgestellten Ausgestaltungen den Vorteil, dass alle Lichtwege durch den Lichtleiter gleichlang sind. Dies ist aus der Figur 3 sofort ersichtlich. Da die Absorptionsverluste von der Lichtweglänge abhängen, ergibt sich aus der gleichen Länge der Lichtwege, dass auch die Absorptionsverluste für alle Lichtwege, auf den denen das Licht den Lichtleiter durchläuft, untereinander gleich sind. Die Absorption führt somit nicht zu einer störenden Inhomogenität des Erscheinungsbildes der leuchtenden Lichtaustrittsfläche.

Die maximal erzielbare Länge L der Austrittsfläche ergibt sich bei einer an der helixförmig angeordneten Umlenkfläche erfolgenden Umlenkung um 90° zu L = 2nr, wobei r der Radius des Becherbodensegments ist. Diese maximal erzielbare Länge ergibt sich für einen 360° - Zylinder. Für einen Teilzylinder verkürzt sich L entsprechend proportional. Die benötigte Bautiefe für den Vollzylinder beträgt T = 2r. Das bedeutet, dass bei gegebener Bautiefe T die Länge L = n T erreicht werden kann. Dasselbe Verhältnis gilt auch beim Halbzylinder.

## Patentansprüche

1. Kraftfahrzeugbeleuchtungseinrichtung (10) mit einer Lichtquelle (16) und einem Lichtleiter (18), der einen Einkoppelbereich (20), eine Lichtaustrittsfläche (22) und Umlenkflächen (24, 26, 28) aufweist, wobei die Lichtquelle (16) relativ zum Lichtleiter (18) so angeordnet ist, dass von ihr ausgehendes Licht über den Einkoppelbereich (20) in den Lichtleiter (18) eintritt, **dadurch gekennzeichnet, dass** der Lichtleiter (18) ein Segment einer becherförmigen Grundform aufweist, welche Grundform einen Becherboden mit einem Außenrand (19.1) und eine Becherwand aufweist, wobei der Lichtleiter ein Becherbodensegment (19) und ein Becherwandsegment (21) aufweist, der Einkoppelbereich (20) im Becherbodensegment (19) angeordnet ist und eine erste Umlenkfläche (24) aufweist, die auf sie einfallendes Licht der Lichtquelle (16) radial zum Becherwandsegment (21) hin umlenkt, wobei zwischen dem Becherbodensegment (19) und dem Becherwandsegment (21) eine zweite Umlenkfläche (26) angeordnet ist, die auf sie einfallendes Licht in das Becherwandsegment (21) richtet, das Becherwandsegment (21) eine helixförmig angeordnete dritte Umlenkfläche (28) aufweist, die einfallendes Licht in eine Umfangsrichtung des Becherwandsegments (21) umlenkt, und wobei die Lichtaustrittsfläche (22) so angeordnet ist, dass in die Umfangsrichtung umgelenktes Licht über die Lichtaustrittsfläche (22) aus dem Lichtleiter (18) austritt.

2. Beleuchtungseinrichtung (10) nach Anspruch 1, **dadurch gekennzeichnet, dass** die becherförmige Grundform über einen mindestens 90° und insbesondere mindestens 180° großen Winkelbereich rotationsymmetrisch zu einer die Lichtquelle (16) durchstoßenden Rotationsachse (27) ist.

3. Beleuchtungseinrichtung (10) nach einem der vorhergehenden Ansprüche, **dadurch gekennzeichnet, dass** das Becherwandsegment (21) die Form eines Zylindermantelsegments besitzt.

4. Beleuchtungseinrichtung (10) nach Anspruch 1 oder 2, **dadurch gekennzeichnet, dass** das Becherwandsegment (21) die Form eines Kegelstumpfsegments besitzt.

5. Beleuchtungseinrichtung (10) nach den Ansprüchen 2 und 4, **dadurch gekennzeichnet, dass** ein Winkel, den eine in einer Ebene mit der Rotationsachse (27) liegende Wandlinie des Kegelstumpfsegments mit der Rotationsachse (27) einschließt, kleiner als 3° ist.

6. Beleuchtungseinrichtung (10) nach einem der vorhergehenden Ansprüche, **dadurch gekennzeichnet, dass** das Becherbodensegment (19) die Form eines Kreissegments besitzt.

7. Beleuchtungseinrichtung (10) nach Anspruch 6, **dadurch gekennzeichnet, dass** das Becherbodensegment (19) die Form eines Halbkreises besitzt.

8. Beleuchtungseinrichtung (10) nach einem der vorhergehenden Ansprüche, **dadurch gekennzeichnet, dass** die erste Umlenkfläche (24) parabolisch geformt ist.

9. Beleuchtungseinrichtung (10) nach einem der vorhergehenden Ansprüche, **dadurch gekennzeichnet, dass**, die zweite Umlenkfläche (26) die Form eines Kegelmantels besitzt.

10. Beleuchtungseinrichtung (10) nach einem der vorhergehenden Ansprüche, **dadurch gekennzeichnet, dass** die Form des Becherwandsegments (21) dadurch entsteht, dass die Form eines dreieckigen Lichtleiters (40) an dem Außenrand (19.1) des Becherbodensegments (19) entlang zu einem Zylindermantelsegment gewickelt ist, so dass die lange Dreiecksseite (42) des dreieckigen Lichtleiters (40) eine schraubenlinienförmige und damit helixförmig angeordnete Schmalseite als dritte Umlenkfläche (28) bildet.

11. Beleuchtungseinrichtung (10) nach Anspruch 10, **dadurch gekennzeichnet, dass** die lange Seite durch Flächenstücke (52") unterbrochen ist, die parallel zum im Lichtleiter (18) in Richtung zur langen Seite (52) propagierenden Licht (54) ausgerichtet sind.

12. Beleuchtungseinrichtung (10) nach einem der vorhergehenden Ansprüche, **dadurch gekennzeichnet, dass** zwischen dem Becherwandsegment (21) und der Lichtaustrittsfläche (22) ein weiteres Lichtleitersegment (25) angeordnet ist, dessen Querschnitt sich in Lichtausbreitungsrichtung vergrößert.

13. Beleuchtungseinrichtung (10) nach einem der vorhergehenden Ansprüche, **dadurch gekennzeichnet, dass** eine Lichtaustrittsfläche (22) eine Länge (L) und eine Breite (B) besitzt, wobei die Breite (B) im Bereich von 2 mm bis 8 mm liegt und die Länge (L) ein 2-faches bis 20-faches der Breite (B) beträgt.

14. Beleuchtungseinrichtung (10) nach einem der vorhergehenden Ansprüche, **dadurch gekennzeichnet, dass** das Becherwandsegment (21) eine grabenartige Vertiefung (49) aufweist.

15. Beleuchtungseinrichtung (10) nach einem der vorhergehenden Ansprüche, **dadurch gekennzeichnet, dass** die dritte Umlenkfläche (28) in zwei oder drei helixförmig angeordnete Teilflächen gleicher Ganghöhe aufgeteilt ist.

## Claims

1. A motor vehicle lighting device (10) having a light source (16) and a fiber-optical waveguide (18), the fiber-optical waveguide having an input region (20), a light exit face (22), and deflection faces (24, 2.6, 28), the light source (16) being located relative to the fiber-optical waveguide (18) in such a way that light emitted by the light source enters the fiber-optical waveguide (18) via the input region (20), **characterized in that** the fiber-optical waveguide (18) has a segment with a cupulate basic shape, which basic shape has a cup base with an outer edge (19.1) and a cup wall, the fiber-optical waveguide having a cup base segment (19) and a cup wall segment (21); the input region (20) is located in the cup base segment (19) and has a first deflection face (24), which deflects the light striking it from the light source (16) radially toward the cup wall segment (21), and a second deflection face (26), which directs light striking it into the cup wall segment (21), is located between the cup base segment (19) and the cup wall segment (21); the cup wall segment (21) has a helically located third deflection face (28), which deflects light striking it into a circumferential direction of the cup wall segment (21); and the light exit face (22) is located such that light deflected into the circumferential direction exits the fiber-optical waveguide (18) via the light exit face (22).

2. The lighting device (10) of claim 1, **characterized in that** over an angular range of at least 90° and in particular at least 180°, the cupulate basic shape is rotationally symmetrical to an axis of rotation (27) that penetrates the fiber-optical waveguide (16).

3. The lighting device (10) of one of the foregoing claims, **characterized in that** the cup wall segment (21) is in the form of a cylinder jacket segment.

4. The lighting device (10) of claim 1 or 2, **characterized in that** the cup wall segment (21) is in the form of a frustoconical segment.

5. The lighting device (10) of claims 2 and 4, **characterized in that** an angle which a wall line of the frustoconical segment forms with the axis of rotation (27) encloses with the axis of rotation (27) is less than 3°.

6. The lighting device (10) of one of the foregoing claims, **characterized in that** the cup base segment (19) is in the form of a segment of a circle.

7. The lighting device (10) of claim 6, **characterized in that** the cup base segment (19) is in the form of a semicircle.

8. The lighting device (10) of one of the foregoing claims, **characterized in that** the first deflection face (24) is shaped parabolically.

9. The lighting device (10) of one of the foregoing claims, **characterized in that** the second deflection face (26) is in the form of an envelope of a cone.

10. The lighting device (10) of one of the foregoing claims, **characterized in that** the shape of the cup wall segment (21) is generated **in that** the shape of a triangular fiber-optical waveguide (40) is wound along the outer edge (19.1) of the cup base segment (19) into a cylinder jacket segment, so that the long side (42) of the triangular fiber-optical waveguide (40) forms a spiral-shaped, and thus helically located, short side as a third deflection face (28).

11. The lighting device (10) of claim 10, **characterized in that** the long side is interrupted by flat parts (52"), which are oriented parallel to the light (54) being propagated in the fiber-optical waveguide (18) in the direction of the long side (52).

12. The lighting device (10) of one of the foregoing claims, **characterized in that** a further fiber-optical waveguide segment (25) whose cross section increases in the light propagation direction is located between the cup wall segment (21) and the light exit face (22).

13. The lighting device (10) of one of the foregoing claims, **characterized in that** a light exit face (22) has a length (L) and a width (B), and the width (B) is in the range from 2 mm to 8 mm, and the length (L) amounts to from 2 to 20 times the width (B).

14. The lighting device (10) of one of the foregoing claims, **characterized in that** the cup wall segment (21) has a trenchlike indentation (49).

15. The lighting device (10) of one of the foregoing claims, **characterized in that** the third deflection face (28) is divided into two or three helically located partial faces having the same pitch.

## Revendications

1. Installation d'éclairage (10) d'un véhicule automobile, comprenant une source lumineuse (16) et un conducteur de lumière (18) qui présente une zone d'entrée (20), une surface de sortie de lumière (22) et des surfaces de renvoi (24, 26, 28), la source lumineuse (16) étant disposée par rapport au conducteur de lumière (18) de manière telle que de la lumière provenant d'elle entre dans le conducteur de lumière (18) par la zone d'entrée (20), **caractérisée en ce que** le conducteur de lumière (18) comprend un segment ayant une forme de base en forme de gobelet, laquelle forme de base comprend un fond de gobelet avec un bord extérieur (19.1) et une paroi de gobelet, le conducteur de lumière comprenant un segment de fond de gobelet (19) et un segment de paroi de gobelet (21), la zone d'entrée (20) étant disposée dans le segment de fond de gobelet (19) et comprenant une première surface de renvoi (24) qui renvoie de la lumière de la source lumineuse (16) arrivant sur elle, radialement vers le segment de fond de gobelet (21), une deuxième surface de renvoi (26) étant disposée entre le segment de fond de gobelet (19) et le segment de paroi de gobelet (21) qui oriente de la lumière arrivant sur elle dans le segment de paroi de gobelet (21), le segment de paroi de gobelet (21) comprenant une troisième surface de renvoi (28) ayant une forme hélicoïdale, qui renvoie de la lumière incidente dans une direction circonférentielle du segment de paroi de gobelet (21), et la surface de sortie de lumière (22) étant disposée de manière telle que de la lumière renvoyée dans la direction circonférentielle sort du conducteur de lumière (18) par la surface de sortie de lumière (22).

2. Installation d'éclairage (10) selon la revendication 1, **caractérisée en ce que** la forme de base en forme de gobelet est symétrique de rotation, sur une zone angulaire d'au moins 90° et notamment d'au moins 180°, par rapport à un axe de rotation (27) traversant la source lumineuse (16).

3. Installation d'éclairage (10) selon l'une des revendications précédentes, **caractérisée en ce que** le segment de paroi de gobelet (21) présente la forme d'un segment d'enveloppe de cylindre.

4. Installation d'éclairage (10) selon la revendication 1 ou 2, **caractérisée en ce que** le segment de paroi de gobelet (21) présente la forme d'un segment de cône tronqué.

5. Installation d'éclairage (10) selon les revendications 2 et 4, **caractérisée en ce qu'**un angle qui est enfermé entre une ligne de paroi du segment de cône tronqué et l'axe de rotation (27), est inférieur à 3°.

6. Installation d'éclairage (10) selon l'une des revendications précédentes, **caractérisée en ce que** le segment de fond de gobelet (19) présente la forme d'un segment de cercle.

7. Installation d'éclairage (10) selon la revendication 6, **caractérisée en ce que** le segment de fond de gobelet (19) présente la forme d'un demi-cercle.

8. Installation d'éclairage (10) selon l'une des revendications précédentes, **caractérisée en ce que** la première surface de renvoi (24) présente une forme parabolique.

9. Installation d'éclairage (10) selon l'une des revendications précédentes, **caractérisée en ce que** la deuxième surface de renvoi (26) présente la forme d'une enveloppe de cône.

10. Installation d'éclairage (10) selon l'une des revendications précédentes, **caractérisée en ce que** la forme de segment de paroi de gobelet (21) est obtenue par le fait que la forme d'un conducteur de lumière triangulaire (40) est enroulée le long du bord extérieur (19.1) du segment de fond de gobelet (19) en segment d'enveloppe de cylindre, si bien que le côté long de triangle (42) du conducteur de lumière triangulaire (40) forme un petit côté disposé en forme de ligne de filetage et ainsi en forme hélicoïdale comme troisième surface de renvoi (28).

11. Installation d'éclairage (10) selon la revendication 10, **caractérisée en ce que** le côté long est interrompu par des parties de surface (52") qui sont orientées parallèlement à la lumière (54) en propagation dans le conducteur de lumière (18) en direction du côté long (52).

12. Installation d'éclairage (10) selon l'une des revendications précédentes, **caractérisée en ce qu'**un autre segment de conducteur de lumière (25) est disposé entre le segment de paroi de gobelet (21) et la surface de sortie (22), dont la section transversale augmente dans la direction de la propagation de lumière.

13. Installation d'éclairage (10) selon l'une des revendications précédentes, **caractérisée en ce qu'**une surface de sortie de lumière (22) présente une longueur (L) et une largeur (B), la largeur (B) étant de l'ordre de 2 mm à 8 mm et la longueur (L) étant deux fois à vingt fois la largeur (B).

14. Installation d'éclairage (10) selon l'une des revendications précédentes, **caractérisée en ce que** le segment de paroi de gobelet (21) comprend un enfoncement (49) ayant la forme d'un fossé.

15. Installation d'éclairage (10) selon l'une des revendications précédentes, **caractérisée en ce que** la troisième surface de renvoi (28) est divisée en deux ou trois surfaces partielles disposées en forme hélicoïdale de même hauteur de pas.
